# EUROPÄISCHE PATENTSCHRIFT

(11) **EP 0 938 993 B1**
(45) Veröffentlichungstag und Bekanntmachung des Hinweises auf die Patenterteilung: **20.08.2003**
(21) Anmeldenummer: 99102954.7
(22) Anmeldetag: 13.02.1999
(51) Int. Cl.: B60J 7/02

(54) **Fahrzeugdach**
Vehicle roof
Toit de véhicule

(30) Priorität: 28.02.1998 DE 19808599
(43) Veröffentlichungstag der Anmeldung: 01.09.1999
(73) Patentinhaber: Bayerische Motoren Werke Aktiengesellschaft, 80788 München (DE); WEBASTO KAROSSERIESYSTEME GmbH, D-82131 Stockdorf (DE)
(72) Erfinder: Schuster, Gerd, Dr., 85764 Oberschleissheim (DE); Stark, Roger, Sipsonville, SC 29861 (US); Bienert, Horst, 82131 Gauting (DE); Kilgus, Bernd, 82343 Pöcking (DE)
(74) Vertreter: Wiese, Gerhard

(56) Entgegenhaltungen:
- DE-A- 19 543 244
- FR-A- 2 622 515
- FR-A- 2 726 512
- US-A- 4 229 037

## Beschreibung

Die Erfindung bezieht sich auf ein Fahrzeugdach mit wenigstens einem bewegbaren Dachteil, das an einem mit dem Fahrzeugdach verbindbaren Rahmen verschiebbar geführt ist, wobei der Rahmen zwei parallele Rahmenlängsteile und wenigstens ein die Rahmenlängsteile verbindendes Rahmenquerteil aufweist gemäß dem in FR 2726512 A1 offenbarten Oberbegriff des Patentanspruchs 1.

Aus der FR 2 726 512 A1 ist ein Fahrzeugdach mit einem Rahmen bekannt, bei dem zwei parallele Rahmenlängsteile mittels eines vorderen Rahmenquerteils und zwei mittleren Rahmenquerteilen sowie zusätzlich mittels eines hinteren Rahmenquerteils verbunden sind. Zwischen den mittleren Rahmenquerteilen ist eine feste Scheibe angeordnet, die bündig zu den benachbarten öffnungsfähigen Dachteilen angeordnet und durch Kleben mit dem Rahmen verbunden ist.

Aus der DE 35 32 104 A1 ist ein Fahrzeugdach bekannt, bei dem zwei parallele Rahmenlängsteile mittels eines vorderen Rahmenquerteils und eines mittleren Rahmenquerteils sowie zusätzlich eines hinteren Rahmenquerteils verbunden sind. Im hinteren Bereich sind die beiden Rahmenlängsteile zur zusätzlichen Aussteifung mit einem Blech verbunden, das zusätzliche Versteifungsdicken aufweist. Ein solcher Rahmen ist typisch für ein Schiebehebedach, dessen Deckel am mit den Rahmenlängsteilen verbundenen Führungsschienen geführt ist. Ein solcher Deckel ist mit seiner Hinterkante über das feste Fahrzeugdach ausstellbar und nach Absenken seiner Hinterkante unter das feste Rahmenteil verfahrbar. Bei einem solchen Fahrzeugdach ist es nachteilig, daß die eine Durchsicht nach oben ermöglichende Dachöffnung relativ klein ausgebildet ist. Ferner bedeutet das Versteifungsblech im hinteren Rahmenteil einen zusätzlichen Material- und Montageaufwand.

Der vorliegenden Erfindung liegt die Aufgabe zugrunde, ein Fahrzeugdach der eingangs genannten Art zu schaffen, bei dem mit einfachen Mitteln eine hinreichende Steifigkeit ermöglicht wird und das ein durchgehend glattflächiges Erscheinungsbild liefert.

Diese Aufgabe wird gemäß der vorliegenden Erfindung durch die Merkmale des Patentanspruchs 1 gelöst. Die zur zusätzlichen Versteifung des Rahmens bündig mit dem Fahrzeugdach angeordnete Platte weist gegenüber den Rahmenlängsteilen eine Höheneinstellbarkeit auf. Dadurch läßt sich eine exakte Ausrichtung der Platte zu den umgebenden Dachteilen erreichen. Ein Strömungsgeräusche verursachender Höhenversatz zwischen den Teilen wird wirksam vermieden. Vorteilhafte Ausgestaltungen der Erfindung sind den Unteransprüchen zu entnehmen.

In Verbindung mit einer Platte aus einem transparenten Werkstoff, wie beispielsweise Glas oder einem transparenten Kunststoff, besteht zusätzlich die Möglichkeit, den Durchsichtsbereich eines Fahrzeugdaches wesentlich zu vergrößern. Außerdem wird das optische Erscheinungsbild eines Fahrzeugdaches durch wenigstens zwei bündig hintereinander angeordnete Glaselemente wesentlich verbessert.

Gemäß einer vorteilhaften Ausgestaltung ist vorgesehen, daß die Platte Träger von Solarzellen ist. Im Gegensatz zur Anordnung von Solarzellen an einem bewegbaren Dachteil (Deckel eines Schiebehebedaches) reduziert sich bei einer Anordnung von Solarzellen auf einer fest mit dem Fahrzeugdach verbundenen Platte der Kontaktierungsaufwand erheblich. Derartige Solarzellen können in amorpher oder kristalliner Ausführung oder als Mischform von beiden Zellentypen verwendet werden, je nachdem, ob eine Durchsicht durch die Platte gewünscht wird und welche Energieausbeute von den Solarzellen erwartet wird.

Vorzugsweise dient die Platte zur Versteifung des Rahmens eines Schiebehebedaches in dessen hinterem Bereich. Das bewegbare Dachteil wird dabei bevorzugt von einem transparenten Deckel des Schiebehebedaches gebildet, so daß Platte und Deckel in Schließposition bündig aneinander liegen. Durch die Versteifung des Rahmens in seinem hinteren Teil durch die bündig mit dem festen Fahrzeugdach angeordnete Platte werden die beim Stand der Technik für herkömmliche Schiebehebedächer unterhalb des festen Fahrzeugdachs zusätzlich vorgesehenen Versteifungsbleche (siehe DE 35 32 104 A1) überflüssig.

Optional kann unterhalb einer Stoßstelle zwischen bewegbarem Dachteil und Platte ein mittleres Rahmenquerteil die Rahmenlängsteile verbinden.

Die Verbindung der Platte mit den Rahmenlängsteilen erfolgt bevorzugt durch Kleben, wobei die Höheneinstellbarkeit der Platte durch die Dicke der Kleberaupe gebildet wird.

Alternativ kann die Höheneinstellbarkeit auch durch eine Schraubverbindung zwischen einem an der Platte befestigten Teil und einem dachfesten Teil gebildet werden.

Nachfolgend sind Ausführungsbeispiele der Erfindung anhand der Zeichnung beschrieben. Es zeigt:
- Fig. 1: die Teildraufsicht auf ein Fahrzeugdach mit einer transparenten Platte,
- Fign. 2A bis 2C: schematische Längsschnitte durch das Fahrzeugdach gemäß Fig. 1 in verschiedenen Betriebspositionen,
- Fig. 3: die Teildraufsicht auf ein Fahrzeugdach mit einer mit Solarzellen bestückten Platte,
- Fign. 4A bis 4C: schematische Längsschnitte durch das Fahrzeugdach gemäß Fig. 3 in verschiedenen Betriebspositionen,
- Fig. 5: den Teilquerschnitt durch den Randbereich des Fahrzeugdaches gemäß der Schnittlinie V-V in Fig. 1 für eine erste Variante einer Plattenbefestigung,
- Fig. 6: einen Teilquerschnitt ähnlich der Fig. 5 für eine zweite Variante der Plattenbefestigung und
- Fig. 7: einen Teilquerschnitt ähnlich der Fig. 5 für eine dritte Variante der Plattenbefestigung.

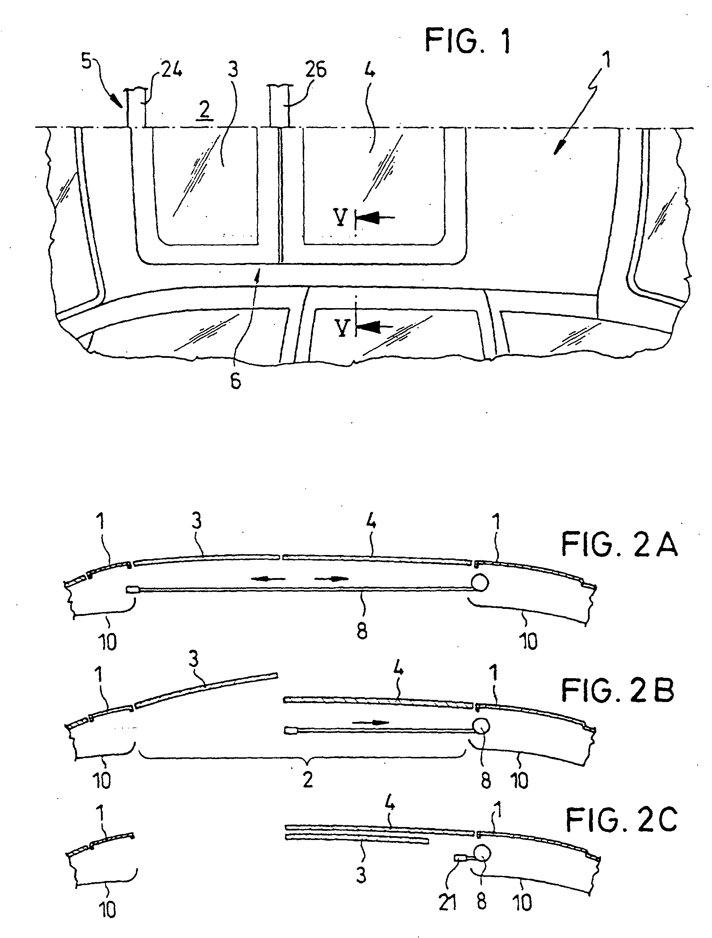

In Fig. 1 ist ein Teil eines Fahrzeugdachs 1, beispielsweise eines Kombi-Fahrzeuges dargestellt. Eine im festen Fahrzeugdach 1 ausgebildete große Dachöffnung 2 ist mittels eines bewegbaren Dachteils, bevorzugt dem Deckel 3 eines Schiebehebedaches, und einer dahinterliegenden festen Dachplatte 4 verschließbar. Sowohl das bewegbare Dachteil als auch die Platte 4 sind aus einem transparenten Werkstoff, wie beispielsweise einem Einscheibensicherheitsglas oder Mehrscheibensicherheitsglas, hergestellt.

Die Einheit aus bewegbarem Dachteil (Deckel 3) und fester Platte 4 ist an einem insgesamt mit 5 bezeichneten Rahmen befestigt, der in bekannter Weise von innen her mit dem festen Fahrzeugdach 1 verbunden ist. Der Rahmen 5 setzt sich aus zwei seitlich der Dachöffnung 2 angeordneten Rahmenlängsteilen 6 und einem vorderen Rahmenquerteil 24 zusammen, das optional durch ein mittleres Rahmenquerteil 26 ergänzt werden kann. Der Rahmen 5 kann dabei sowohl modular aus einzelnen Rahmenteilen 6, 24 und 26 zusammengesetzt als auch einstückig ausgebildet sein.

Das mittlere Rahmenquerteil 26 ist dann bevorzugt unter der Stoßstelle des bewegbaren Dachteils 3 mit der Platte 4 angeordnet.
Der Deckel 3 ist in bekannter Weise an Führungsschienen 7 bewegbar geführt, die an den Rahmenlängsteilen 6 befestigt oder integral an diesen ausgebildet sind.

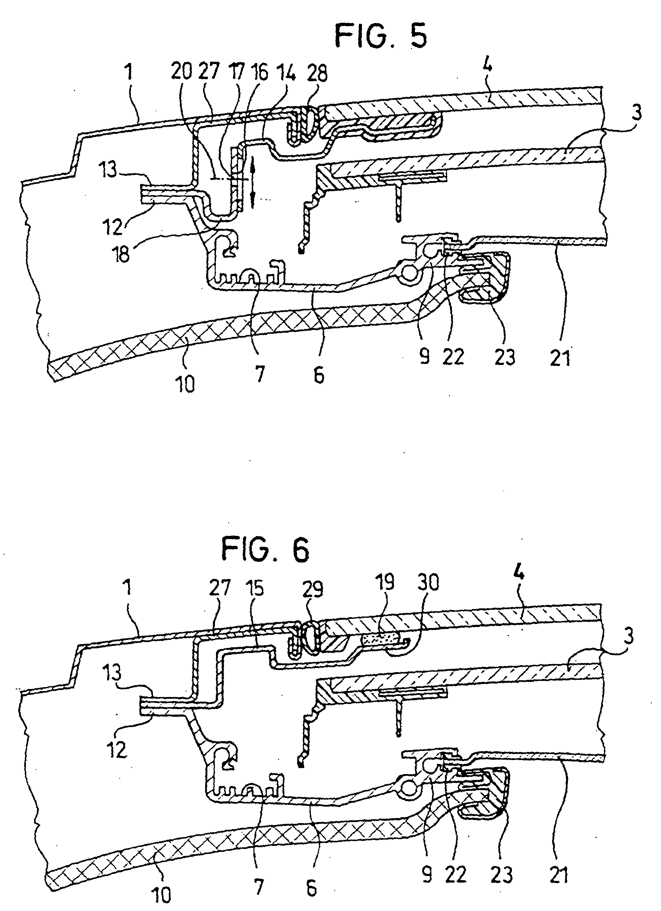

Zur Abschattung des transparenten Dachsystems 3 bzw. 4 ist innenraumseitig in den Fign. 2A - C ein Rollo 8 vorgesehen, der sich in ausgezogener Position gemäß Fig. 2A über die gesamte Länge der Dachteile 3 bzw. 4 erstreckt. Die Aufwickelvorrichtung des Rollos 8 ist dabei im hinteren Bereich des Fahrzeugdachs 1 zwischen diesem und einem zum Innenraum hin angrenzenden Festhimmel 10 angeordnet. Das Rollo 8 ist an seiner Vorderkante mit einem festen Spriegel 21 versteift, der mittels seitlicher Gleitelemente 22 in einer weiteren Führungsschiene 9 gleitend geführt ist, welche entweder an den seitlichen Rahmenlängsteilen 6 befestigbar oder - wie in den Fign. 5 bis 7 dargestellt - integral an diesen ausgebildet ist. Das Rollo 8 kann mittels eines separaten Elektromotors durch nicht dargestellte Antriebskabel zwischen der in Fig. 2A dargestellten vollständig geschlossenen Position und der in Fig. 2C dargestellten vollständig geöffneten Position stufenlos verstellt werden. Alternativ zur dargestellten Ausführungsform kann ein Rollo auch mit einer vorn liegenden Aufwickelvorrichtung versehen sein oder es sind zwei Rollos vorgesehen. die mit ihren Aufwickelvorrichtungen unterhalb der Stoßstelle zwischen Deckel 3 und Platte 4 angeordnet sind.

Der Deckel 3 kann aus der in Fig. 2A gezeigten Schließposition in an sich bekannter Weise gemäß Fig. 2B in eine Ausstellposition mit seiner Hinterkante über das feste Fahrzeugdach bzw. über die feste Platte 4 nach oben ausgestellt oder, wie in Fig. 2C dargestellt, nach Absenken seiner Hinterkante unter die Platte 4 nach hinten verschoben werden.

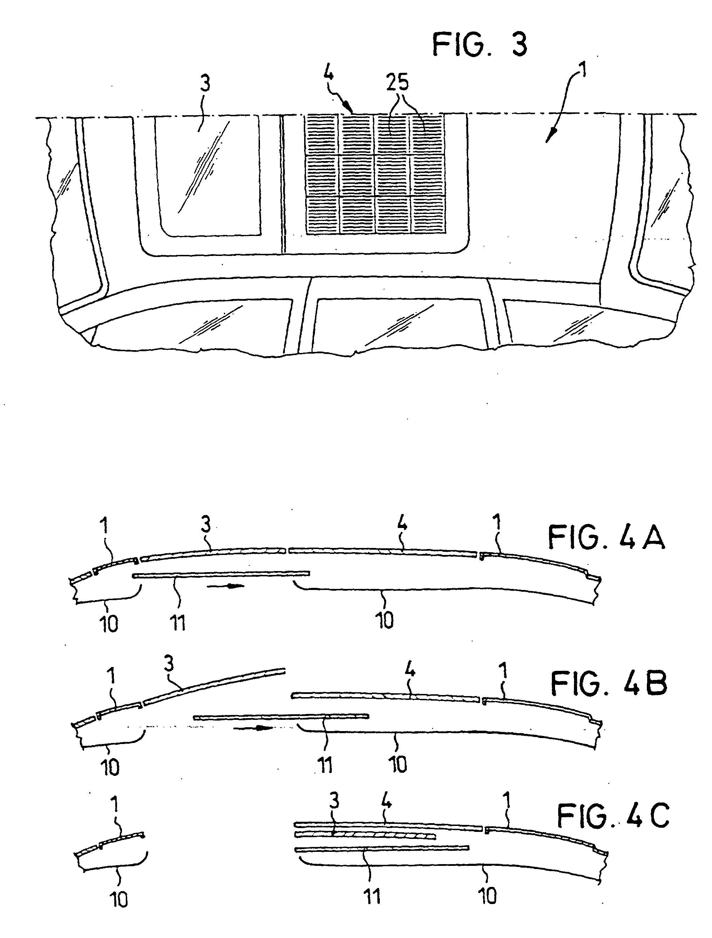

Bei der in den Fign. 3 und 4 gezeigten alternativen Ausführungsform ist die hintere feste Platte 4, die ebenso wie im ersten Ausführungsbeispiel bündig mit dem davor angeordneten transparenten Deckel 3 sowie mit dem angrenzenden festen Fahrzeugdach 1 angeordnet ist, zusätzlich mit Solarzellen 25 bestückt. Im dargestellten Fall handelt es sich dabei um kristalline Solarzellen 25, sodaß die Platte 4 im wesentlich undurchsichtig ist. Aus diesem Grunde ist statt des Rollos 8, der sich beim Ausführungsbeispiel gemäß Fig. 1 und 2 über die gesamte Länge des bewegbaren Dachteils 3 und der Platte 4 erstreckt, ein Schiebehimmel 11 vorgesehen, der in seiner Schließposition den Innenraum nur bezüglich des Deckels 3 abschattet. Bei Verwendung von amorphen Solarzellen 25 kann selbstverständlich an Stelle des verschiebbaren Schiebehimmels 11 wiederum ein großes Rollo 8 vorgesehen werden, da dann auch der Bereich der Platte 4 zum Durchsichtsbereich gehört. Der Festhimmel 10, der sich gemäß den Fign. 4A bis 4C auch unterhalb der Platte 4 erstreckt, endet dann - wie beim ersten Ausführungsbeispiel - unter dem hinteren Ende der Platte 4.

Das bewegbare Dachteil 3 ist in den Fign. 4A bis 4C analog zur ersten Ausführungsform gemäß den Fign. 2A bis 2C bewegbar. Der Schiebehimmel 11 kann aus seiner geschlossenen Position gemäß Fig. 4A über eine teilweise geöffnete Position gemäß Fig. 4B bis zur vollständig geöffneten Position gemäß Fig. 4C stufenlos verstellt werden. Dies kann sowohl manuell als auch elektrisch erfolgen, wobei als weitere Variante auch ein automatisches, an die Stellung des Deckels 3 gekoppeltes Verfahren des Schiebehimmels 11 vorgesehen sein kann.

In den Fign. 5 bis 7 sind drei verschiedene Varianten einer Befestigung der Platte 4 an den Rahmenlängsteilen 6 dargestellt. In allen drei Varianten sind die Rahmenlängsteile einteilig als Strangpreßprofil mit integrierten Führungsschienen 7 für das bewegbare Dachteil 3 und integrierten weiteren Führungsschienen 9 für das Rollo 8 bzw. den Schiebehimmel 11 hergestellt. Die Rahmenlängsteile 6 sind jeweils mit einem außenliegenden horizontalen Rahmenflansch 12 an einem darüber angeordnetem Dachflansch 13 befestigt, der an einem mit dem festen Fahrzeugdach 1 im Bereich der Seitenholme verbundenen Verstärkungsblech 27 ausgebildet ist.

Gemäß der ersten Variante, die in Fig. 5 dargestellt ist, ist die Platte 4 im Randbereich, beispielsweise durch eine Umspritzung mit einem Kunststoffrahmen. mit einem Plattenträger 14 verbunden, der im Übergangsbereich von der Platte 4 zum Seitenholm einen vertieften Wasserrinnenbereich und daran nach außen anschließend nach einem erhöhten Abgrenzungsbereich einen in etwa vertikalen; nach unten gerichteten Steg aufweist, an dem ein Langloch 16 ausgebildet ist. Das Langloch 16 dient in Verbindung mit einer Bohrung 17, die an einer mit dem Dachflansch 13 verbundenen Konsole 18 ausgebildet ist, zu einer Höheneinstellung der Platte 4 bezüglich des festen Fahrzeugdachs 1. Hierzu kann die Bohrung 17 beispielsweise als Gewindebohrung ausgelegt sein, sodaß eine in die Bohrung 17 eingedrehte Schraube mit großer Beilagscheibe von der Innenseite nach entsprechender Einstellung des Langlochs zur Fixierung des Plattenträgers 14 gegenüber der Konsole 18 verwendet werden kann.

Zur Abdichtung des festen Fahrzeugdachs 1 im Bereich der Seitenholme gegenüber der Platte 4 ist gemäß Fig. 5 eine am festen Fahrzeugdach beispielsweise durch Kleben befestigte Dichtung 28 vorgesehen.

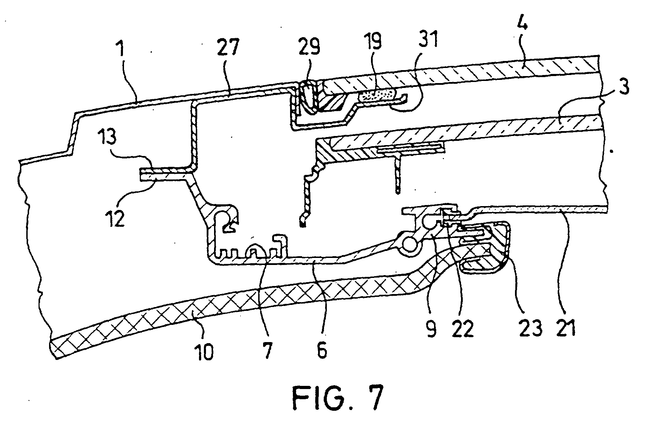

Bei der in Fig. 6 gezeigten Variante sind ebenso wie bei der in Fig. 7 gezeigten Variante die zur Fig. 5 gleichen Bauteile mit gleichen Bezugszeichen versehen. Abweichend von der ersten Ausführungsform gemäß Fig. 5 erfolgt bei den Varianten gemäß Fig. 6 und Fig. 7 die Höheneinstellung der Platte 4 gegenüber dem festen Fahrzeugdach 1 mittels einer Kleberaupe 19, die durch ihre variable, kompressible Dicke eine bündige Ausrichtung der Platte 4 gegenüber dem festen Fahrzeugdach 1 ermöglicht. Bei beiden Varianten gemäß Fig. 6 und 7 ist das feste Fahrzeugdach 1 im Seitenholmbereich gegenüber der Platte 4 durch eine Dichtung 29 abgedichtet, die am Seitenrand der Platte 4 angeordnet ist. Eine solche Dichtung 29 ist außerdem bevorzugt auch an der Vorderkante und der Hinterkante der Platte 4 vorhanden. Zur Befestigung der Platte dient in der Fig. 6 ein Plattenträger 15, der mit seinem äußeren Ende im Flanschbereich zwischen Dachflansch 13 und Rahmenflansch 12 befestigt ist. Der Plattenträger 15 untergreift die Stoßstelle zwischen Seitenholm und Platte 4 im Bereich der Dichtung 29 wiederum mit einer vertieften, längs verlaufenden Sicke, die eine Wasserrinnenfunktion ausübt und endet an seinem inneren Ende in Form eines in etwa horizontalen Flansches 30, der die Kleberaupe 19 trägt.

Bei der in Fig. 7 dargestellten Variante wurde auf einen separaten Plattenträger 15 verzichtet. Die Kleberaupe 19 legt sich hierbei auf einen nach innen vorspringenden Flansch 31 eines Verstärkungsblechs 27 an, das im Holmbereich mit dem festen Fahrzeugdach 1 verbunden ist.

Durch die Verbindung der Platte 4 über den Dachflansch 13 zum Rahmenflansch 12 wird dabei der Rahmen 5 über die Rahmenlängsteile 6 zumindestens mittelbar auch im hinteren Bereich ausgesteift.

### Bezugszeichenliste

- 1: Fahrzeugdach
- 2: Dachöffnung
- 3: bewegbares Dachteil (Deckel)
- 4: Platte
- 5: Rahmen
- 6: Rahmenlängsteil
- 7: Führungsschiene (für 3)
- 8: Rollo
- 9: weitere Führungsschiene (für 8 oder 11)
- 10: Festhimmel
- 11: Schiebehimmel
- 12: Rahmenflansch
- 13: Dachflansch
- 14: Plattenträger (Fig. 5)
- 15: Plattenträger (Fig. 6)
- 16: Langloch (in 14)
- 17: Bohrung (in 18)
- 18: Konsole (Fig. 5)
- 19: Kleberaupe (Fig. 6 und 7)
- 20: Schraubverbindung
- 21: Spriegel (von 8)
- 22: Gleitelement
- 23: Keder
- 24: Rahmenquerteil (vorderes)
- 25: Solarzellen
- 26: Rahmenquerteil (mittleres)
- 27: Verstärkungsblech
- 28: Dichtung (an 1)
- 29: Dichtung (an 4)
- 30: Flansch (an 15)
- 31: Flansch (an 27)

## Patentansprüche

1. Fahrzeugdach (1) mit wenigstens einem bewegbaren Dachteil (Deckel 3), das an einem mit dem Fahrzeugdach (1) verbindbaren Rahmen (5) verschiebbar geführt ist, wobei der Rahmen zwei parallele Rahmenlängsteile (6) und wenigstens ein die Rahmenlängsteile verbindendes Rahmenquerteil (24) aufweist und zur zusätzlichen Versteifung des Rahmens (5) eine bündig mit dem Fahrzeugdach (1) angeordnete Platte (4) vorgesehen ist, die an zwei seiten zumindest mittelbar mit den Rahmenlängsteilen (6) verbunden ist,
**dadurch gekennzeichnet,**
**daß** die Platte (4) gegenüber den Rahmenlängsteilen (6) eine Höheneinstellbarkeit aufweist.

2. Fahrzeugdach nach Anspruch 1,
**dadurch gekennzeichnet, daß** die Platte (4) aus einem transparenten Werkstoff besteht.

3. Fahrzeugdach nach Anspruch 1 oder 2,
**dadurch gekennzeichnet, daß** die Platte (4) aus Glas besteht.

4. Fahrzeugdach nach einem der Ansprüche 1 bis 3,
**dadurch gekennzeichnet, daß** die Platte (4) Träger von Solarzellen (25) ist.

5. Fahrzeugdach nach einem der vorhergehenden Ansprüche,
**dadurch gekennzeichnet, daß** die Platte (4) den Rahmen (5) in dessen hinteren Bereich versteift, und daß der Rahmen (5) zu einem Schiebehebedach gehört.

6. Fahrzeugdach nach einem der vorhergehenden Ansprüche,
**dadurch gekennzeichnet, daß** das bewegbare Dachteil von einem transparenten Deckel (3) eines Schiebehebedaches gebildet wird.

7. Fahrzeugdach nach Anspruch 6,
**dadurch gekennzeichnet, daß** die Platte (4) und der Deckel (3) in Schließposition bündig aneinander liegen.

8. Fahrzeugdach nach einem der vorhergehenden Ansprüche,
**dadurch gekennzeichnet, daß** unterhalb einer Stoßstelle zwischen bewegbarem Dachteil (Deckel 3) und Platte (4) ein mittleres Rahmenquerteil (26) die Rahmenlängsteile (6) verbindet.

9. Fahrzeugdach nach einem der vorhergehenden Ansprüche,
**dadurch gekennzeichnet, daß** die Platte (4) durch Kleben mit den Rahmenlängsteilen (6) verbunden ist.

10. Fahrzeugdach nach einem der Ansprüche 1 bis 9,
**dadurch gekennzeichnet, daß** die Höheneinstellbarkeit der Platte durch die Dicke einer Kleberaupe (19) gebildet wird.

11. Fahrzeugdach nach einem der Ansprüche 1 bis 9,
**dadurch gekennzeichnet, daß** die Höheneinstellbarkeit durch eine Schraubverbindung (20) zwischen einem an der Platte (4) befestigten Teil (Plattenträger 14) und einem dachfesten Teil (Dachflansch 13) gebildet wird.

## Claims

1. Vehicle roof (1) with at least one movable roof part (cover 3), which is guided displaceably on a frame (5) that can be connected to the vehicle roof (1), the frame having two parallel longitudinal frame parts (6) and at least one transverse frame part (24), which connects the longitudinal frame parts, and a plate (4) arranged flush with the vehicle roof (1) being provided for additional stiffening of the frame (5), the plate being connected at least indirectly to the longitudinal frame parts (6) on two sides, **characterized in that** the plate (4) is vertically adjustable relative to the longitudinal frame parts (6).

2. Vehicle roof according to Claim 1, **characterized in that** the plate (4) is composed of a transparent material.

3. Vehicle roof according to Claim 1 or 2, **characterized in that** the plate (4) is composed of glass.

4. Vehicle roof according to one of Claims 1 to 3, **characterized in that** the plate (4) is a carrier for solar cells (25).

5. Vehicle roof according to one of the preceding claims, **characterized in that** the plate (4) stiffens the frame (5) in the rear area of the latter, and **in that** the frame (5) belongs to a sliding/lifting roof.

6. Vehicle roof according to one of the preceding claims, **characterized in that** the movable roof part is formed by a transparent cover (3) of a sliding/lifting roof.

7. Vehicle roof according to Claim 6, **characterized in that** the plate (4) and the cover (3) rest flush against one another in the closed position.

8. Vehicle roof according to one of the preceding claims, **characterized in that** a central transverse frame part (26) connects the longitudinal frame parts (6) underneath a butt joint between the movable roof part (cover 3) and the plate (4).

9. Vehicle roof according to one of the preceding claims, **characterized in that** the plate (4) is connected to the longitudinal frame parts (6) by adhesive bonding.

10. Vehicle roof according to one of Claims 1 to 9, **characterized in that** the vertical adjustability of the plate is formed by the thickness of an adhesive bead (19).

11. Vehicle roof according to one of Claims 1 to 9, **characterized in that** the vertical adjustability is formed by a screwed joint (20) between a part (plate carrier 14) secured on the plate (4) and a part (roof flange 13) fixed with respect to the roof.

## Revendications

1. Toit de véhicule (1) avec au moins une partie mobile de toit (couvercle (3)), qui est guidée de manière coulissante sur un cadre (5) pouvant être relié au toit de véhicule (1), le cadre comprenant deux longerons de cadre parallèles (6) et au moins une traverse de cadre (24) reliant les longerons de cadre et, pour un raidissement supplémentaire du cadre (5) il est prévu une plaque (4) disposée à fleur avec le toit de véhicule (1), plaque qui est reliée de deux côtés au moins indirectement aux longerons de cadre (6),
**caractérisé en ce que**
la plaque (4) comporte une possibilité de réglage en hauteur par rapport aux longerons de cadre (6).

2. Toit de véhicule selon la revendication 1,
**caractérisé en ce que** la plaque (4) est constituée par un matériau transparent.

3. Toit de véhicule selon la revendication 1 ou 2,
**caractérisé en ce que** la plaque (4) est constituée en verre.

4. Toit de véhicule selon l'une quelconque des revendications 1 à 3,
**caractérisé en ce que** la plaque (4) est un support de cellules solaires (25).

5. Toit de véhicule selon l'une quelconque des revendications précédentes,
**caractérisé en ce que** la plaque (4) rigidifie le cadre (5) dans sa zone arrière, et **en ce que** le cadre (5) fait partie d'un toit ouvrant coulissant et basculant.

6. Toit de véhicule selon l'une quelconque des revendications précédentes,
**caractérisé en ce que** la partie de toit mobile est formée par un couvercle (3) transparent d'un toit ouvrant coulissant et basculant.

7. Toit de véhicule selon la revendication 6,
**caractérisé en ce qu'**en position de fermeture, la plaque (4) et le couvercle (3) reposent à fleur l'un contre l'autre.

8. Toit de véhicule selon l'une quelconque des revendications précédentes,
**caractérisé en ce qu'**en dessous d'une jointure entre la partie de toit mobile (couvercle (3)) et la plaque (4), une traverse médiane de cadre (26) relie les longerons de cadre (6).

9. Toit de véhicule selon l'une quelconque des revendications précédentes,
**caractérisé en ce que** la plaque (4) est reliée aux longerons de cadre (6) par collage.

10. Toit de véhicule selon l'une quelconque des revendications 1 à 9,
**caractérisé en ce que** la possibilité de réglage en hauteur de la plaque est formée par l'épaisseur d'un cordon de colle (19).

11. Toit de véhicule selon l'une quelconque des revendications 1 à 9,
**caractérisé en ce que** la possibilité de réglage en hauteur est formée par un assemblage à vis (20) entre une pièce (support de plaque (14)) fixée sur la plaque (4) et une pièce solidaire du toit (bride de toit (13)).
